(19) Europäisches Patentamt
European Patent Office
Office européen des brevets

(11) **EP 4 671 017 A1**

(12) **EUROPEAN PATENT APPLICATION**
published in accordance with Art. 153(4) EPC

(43) Date of publication:
**31.12.2025 Bulletin 2026/01**

(21) Application number: **24760224.6**

(22) Date of filing: **14.02.2024**

(51) International Patent Classification (IPC):
**B60K 1/04** (2019.01)  **F16F 7/00** (2006.01)
**H01M 50/224** (2021.01)  **H01M 50/242** (2021.01)

(52) Cooperative Patent Classification (CPC):
**B60K 1/04; F16F 7/00; H01M 50/224;
H01M 50/242; Y02E 60/10**

(86) International application number:
**PCT/JP2024/005091**

(87) International publication number:
**WO 2024/176923 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.02.2023 JP 2023027447**

(71) Applicant: **Resonac Corporation
Tokyo 105-7325 (JP)**

(72) Inventors:
• **NAKAUCHI, Masataka
Tokyo 105-7325 (JP)**
• **LEE, Haein
Tokyo 105-7325 (JP)**
• **KAKUDA, Kohsuke
Tokyo 105-7325 (JP)**

(74) Representative: **Strehl & Partner mbB
Maximilianstrasse 54
80538 München (DE)**

(54) **FRAME MEMBER AND MANUFACTURING METHOD**

(57) A frame member has an aluminum-alloy extruded material in which a plurality of nodes are set in a cross-sectional space of an outer peripheral wall and a plurality of ribs connecting the nodes are provided inside the outer peripheral wall, and the frame member has a cross-sectional shape in which a maximum number of the ribs connected to one of the nodes is three or less and there are four or more nodes that are not connected to the ribs.

**FIG.3**

**EP 4 671 017 A1**

# EP 4 671 017 A1

**Description**

TECHNICAL FIELD

The present disclosure relates to a frame member and a manufacturing method.

BACKGROUND ART

For example, an energy absorbing member made of an aluminum alloy, which has an effect of absorbing an impact when subjected to a compressive impact load in an axial direction and is excellent in impact energy absorbability suitable as a structural member of, for example, an automobile or the like, has been known (for example, see Patent Document 1).

RELATED ART DOCUMENTS

PATENT DOCUMENT

Patent Document 1: Japanese Unexamined Patent Publication No. 2004-106612

SUMMARY OF THE INVENTION

PROBLEMS TO BE SOLVED BY THE INVENTION

A battery case for an electric vehicle is required to have, as advantageous characteristics, collision resistance for protecting a battery in the event of a collision and lightweight properties for extending a traveling distance. In addition, as the collision resistance for protecting a battery in the event of a collision, it is required to absorb impact energy in a vertical direction (lateral direction), not in an axial direction (longitudinal direction), of the frame member of the battery case. The energy absorbing member made of an aluminum alloy disclosed in Patent Document 1 has a function of absorbing an impact sustained in an axial direction of the energy absorbing member made of an aluminum alloy.

An object of the present disclosure is to provide a frame member with an improved collision resistance in a vertical direction and a reduced weight, and a method of manufacturing the same.

MEANS FOR SOLVING THE PROBLEMS

The present disclosure includes the following configurations.

[1] A frame member having an aluminum-alloy extruded material in which a plurality of nodes are set in a cross-sectional space of an outer peripheral wall and a plurality of ribs connecting the nodes are provided inside the outer peripheral wall, wherein the frame member has a cross-sectional shape in which a maximum number of the ribs connected to one of the nodes is three or less and there are four or more nodes that are not connected to the ribs.

[2] The frame member described in [1], wherein the outer peripheral wall has a square cross section, and eight nodes are set at equal intervals on the outer peripheral wall of the cross section, and one node is set at a position of a center of the cross section.

[3] The frame member described in [1] or [2], wherein the frame is used as a battery case for an electric vehicle.

[4] The frame member described in any one of [1] to [3], wherein the cross-sectional shape of the frame member is identified based on a result of evaluating an energy absorption amount per unit mass when a compressive load is applied in a lateral direction of the frame member.

[5] A method for manufacturing a frame member having an aluminum-alloy extruded material in which a plurality of nodes are set in a cross-sectional space of an outer peripheral wall and a plurality of ribs connecting the nodes are provided inside the outer peripheral wall, the method comprising: manufacturing the frame member that has a cross-sectional shape in which a maximum number of the ribs connected to one of the nodes is three or less and there are four or more nodes that are not connected to the ribs.

EFFECTS OF THE INVENTION

According to the present disclosure, it is possible to provide a frame member with improved collision resistance in a vertical direction and a reduced weight, and a method of manufacturing the same.

BRIEF DESCRIPTION OF THE DRAWINGS

FIG. 1 is a diagram illustrating a schematic configuration of an example of a battery case for an electric vehicle according to a present embodiment.

FIG. 2 is an explanatory diagram illustrating an example of a frame member according to the present embodiment.

FIG. 3 is an explanatory diagram illustrating examples of cross-sectional shape patterns of the frame member.

FIG. 4 is an explanatory diagram illustrating an example of listing of the cross-sectional shape patterns of the frame member.

FIG. 5 is an explanatory diagram illustrating an example of evaluation of an energy absorption amount when a compressive load is applied to the frame member in a vertical direction.

FIG. 6 is a graph representing an example of a relationship between a test force and a stroke amount.

FIG. 7 is a graph in which a relationship between an energy absorption amount and a weight of the frame member for each cross-sectional shape pattern of the frame member is plotted.

FIG. 8 is an explanatory diagram illustrating an example of a result of clustering according to an energy absorption amount per unit mass.

FIG. 9 is an explanatory diagram illustrating an example of a result of clustering according to an energy absorption amount per unit mass.

FIG. 10 is a diagram in which a clustering result is reflected in a plot of a relationship between an energy absorption amount and a weight of a frame member for each cross-sectional shape pattern of the frame member.

FIG. 11 is a hardware configuration diagram of an example of a computer according to the present embodiment.

FIG. 12 is a flowchart of an example of a process for identifying a cross-sectional shape pattern of a frame member to be achieved.

DESCRIPTION OF EMBODIMENTS

Next, an embodiment of the present invention will be described in detail. The present invention, however, is not limited to the following embodiment.

(First Embodiment)

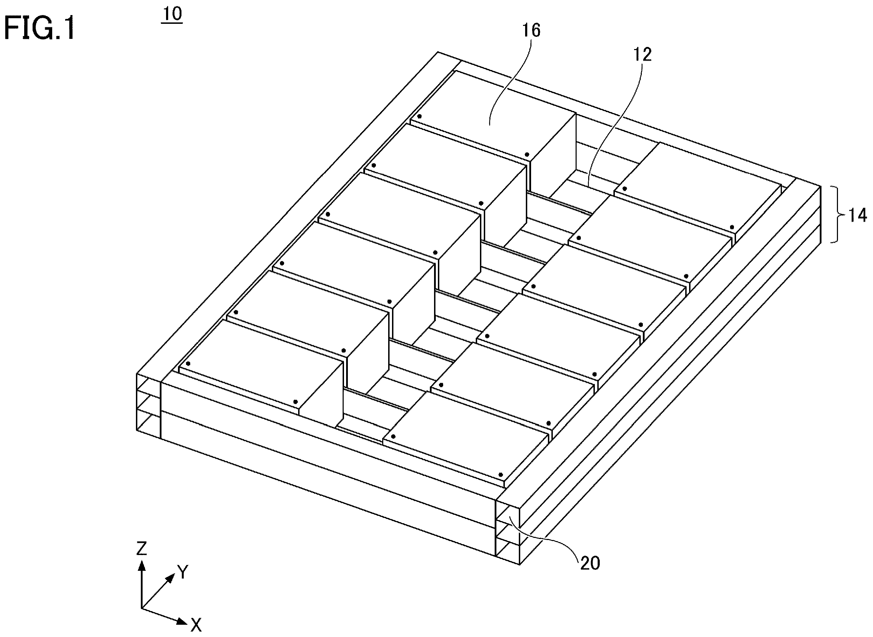

FIG. 1 is a view illustrating a schematic configuration of an example of a battery case 10 for an electric vehicle according to the present embodiment. The battery case 10 of FIG. 1 is arranged, for example, under a floor panel of an electric vehicle. In the drawing, the X direction indicates a vehicle width direction. The Y direction indicates a vehicle length direction. The Z direction indicates a vehicle height direction. The battery case 10 has a bottom surface portion 12 and a side surface portion 14 surrounding the periphery of the bottom surface portion 12. A battery cell 16 is mounted in the battery case 10.

The side surface portion 14 of the battery case 10 is made up of a plurality of frame members 20. The side surface portion 14 illustrated in FIG. 1 has two side surfaces that perpendicularly intersect with the vehicle width direction (X direction) and two side surfaces that perpendicularly intersect with the vehicle length direction (Y direction). Each side surface of the side surface portion 14 illustrated in FIG. 1 is made up of a plurality of frame members 20 stacked in the Z direction.

The frame member 20 according to the present embodiment is configured to have, for example, an aluminum-alloy extruded material. The cross-sectional shape of the frame member 20 may take the following form.

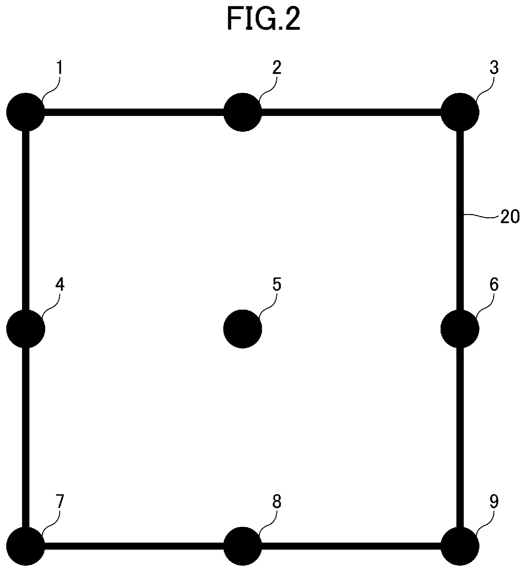

FIG. 2 is an explanatory diagram illustrating an example of the frame member 20 according to the present embodiment. The frame member 20 illustrated in FIG. 2 represents a cross-sectional space of the outer peripheral wall perpendicular to the longitudinal direction. As illustrated in FIG. 2, a plurality of nodes are set at equal intervals in the cross-sectional space of the outer peripheral wall of the frame member 20. In the present embodiment, an example where a plurality of nodes 1 to 9 are set in a cross-sectional space of the outer peripheral wall of the frame member 20 will be described.

FIG. 2 illustrates an example where the cross section of the outer peripheral wall of the frame member 20 is square. Except node 5, all nodes are set at equal intervals on the outer peripheral wall of the cross section. Node 5 is set at the center of the cross section. The positions set as illustrated in FIG. 2 are merely an example. Although FIG. 2 illustrates an example in which the cross section of the outer peripheral wall of the frame member 20 is square, the cross section is not limited to a square. The portions corresponding to the corners of the square may be rounded in accordance with processability or constraints in manufacturing as long as an advantageous effect of the present invention is not diminished.

The frame member 20 can be provided with ribs connecting nodes 1 to 9 in the inside of the outer peripheral wall.

In the present embodiment, the outer peripheral wall is not included in the ribs. In the present embodiment, a rib extending over node 5 is not distinguished. For example, what appears to be a rib connecting nodes 4, 5, and 6 is not considered a single rib connecting nodes 4 and 6; instead, it is defined as two separate ribs: one connecting nodes 4 and 5, and the other connecting nodes 5 and 6.

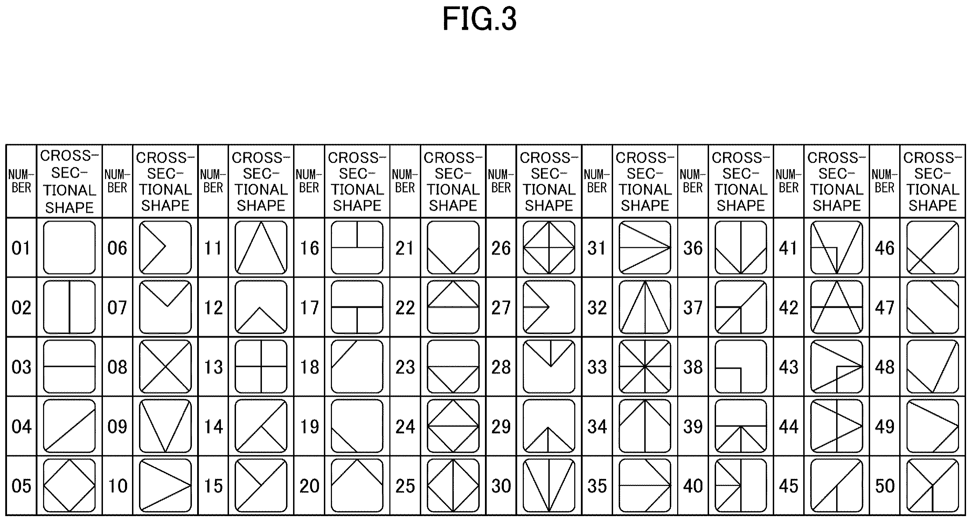

The frame member 20 in which the nodes 1 to 9 are set as illustrated in FIG. 2 can create cross-sectional shape patterns as illustrated in FIG. 3 for example, with the number of ribs and combinations of nodes 1 to 9 connecting the ribs. FIG. 3 is an explanatory diagram illustrating examples of the cross-sectional shape patterns of the frame member 20. The cross-sectional shape patterns illustrated in FIG. 3 are merely examples. In FIG. 3, the cross-sectional shape patterns are denoted by numbers "01" to "50" so that the cross-sectional shape patterns can be identified.

For example, the cross-sectional shape pattern of number "01" is an example in which the number of ribs is zero and nodes 1 to 9 are not connected by any ribs. The cross-sectional shape pattern of number "06" is an example in which the number of ribs is two, node 1 and node 5 are connected by one rib, and node 5 and node 7 are connected by one rib.

The cross-sectional shape pattern of number "11" is an example in which the number of ribs is two, node 2 and node 7 are connected by one rib, and node 2 and node 9 are connected by one rib. The sectional shape pattern of number "26" is an example in which the number of ribs is eight, nodes 2 and 4 are connected by one rib, nodes 2 and 6 are connected by one rib, nodes 4 and 8 are connected by one rib, nodes 6 and 8 are connected by one rib, nodes 2 and 5 are connected by one rib, nodes 4 and 5 are connected by one rib, nodes 5 and 6 are connected by one rib, and nodes 5 and 8 are connected by one rib.

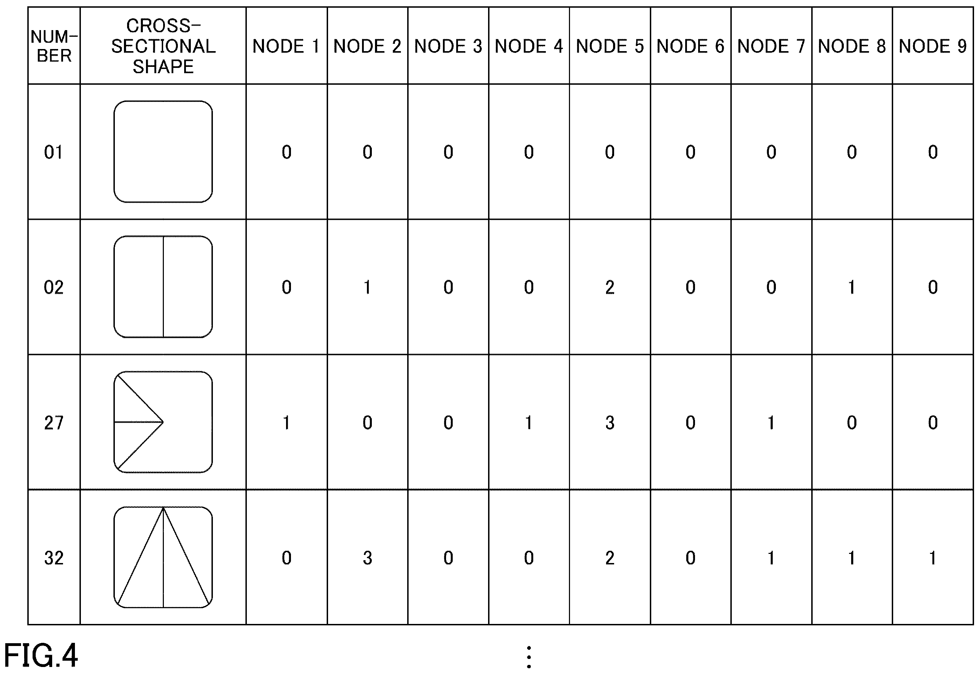

The cross-sectional shape patterns of the frame member 20 illustrated in FIG. 3 can be listed as illustrated in FIG. 4, for example, according to the number of ribs connected to nodes 1 to 9.

FIG. 4 is an explanatory diagram illustrating an example of listing of the cross-sectional shape patterns of the frame member 20. In FIG. 4, the number of ribs connecting nodes 1 to 9 is illustrated for each cross-sectional shape pattern. For example, the cross-sectional shape pattern of number "01" is an example in which no ribs are provided, and thus the number of ribs connecting nodes 1 to 9 is zero.

For example, in the cross-sectional shape pattern of number "02", node 2 and node 5 are connected by one rib, and node 5 and node 8 are connected by one rib. Therefore, the number of ribs connecting node 2 is one. The number of ribs connecting node 5 is two. The number of ribs connecting node 2 is one.

For example, in the sectional shape pattern of number "27", node 1 and node 5 are connected by one rib, node 4 and node 5 are connected by one rib, and node 5 and node 7 are connected by one rib. Therefore, the number of ribs connecting node 1 is one. The number of ribs connecting node 4 is one. The number of ribs connected to node 5 is three. The number of ribs connecting node 7 is one.

In the present embodiment, for each cross-sectional shape of the frame member 20 illustrated in FIG. 3, the collision resistance (collision performance) of the frame member 20 in the vertical direction (lateral direction) is evaluated by an amount of energy absorbed per unit mass when a compressive load is applied in the vertical direction.

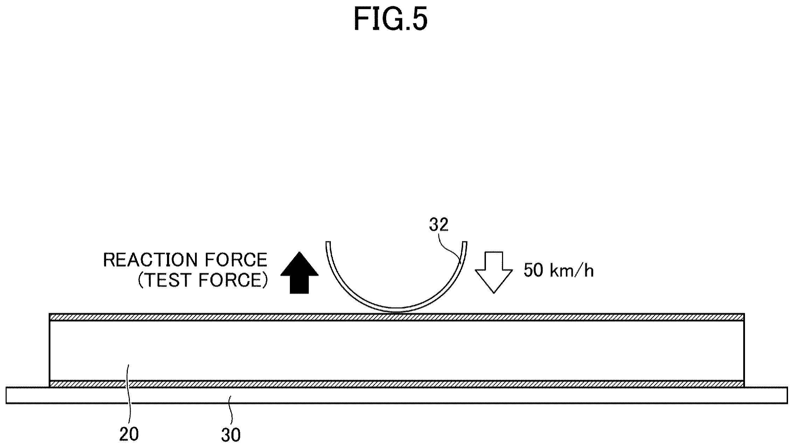

FIG. 5 is an explanatory diagram illustrating an example of evaluation of an energy absorption amount when a compressive load is applied to the frame member 20 in the vertical direction. FIG. 5 illustrates an example in which the punch 32 is pushed into the frame member 20 placed on the surface plate 30, and the relationship between the amount of pushing (stroke amount) and the reaction force (test force) from the frame member 20 is acquired.

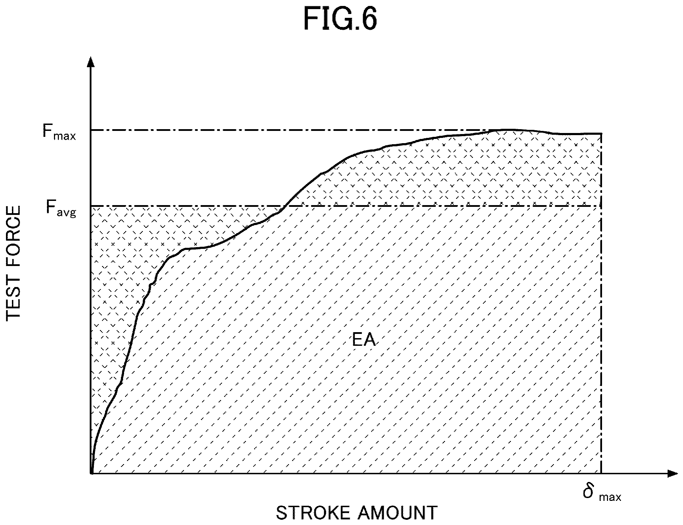

For example, the punch 32 pushes the frame member 20 placed on the surface plate 30 from the initial position at a speed of 50 km/h. The relationship between the stroke amount and the test force when the punch 32 is pushed into the frame member 20 can be represented by, for example, a graph of the test force and the stroke amount illustrated in FIG. 6.

FIG. 6 is a graph representing an example of the relationship between a test force and a stroke amount. The energy absorption amount (EA) when a compressive load is applied in the vertical direction of the frame member 20 can be calculated from the graph illustrated in FIG. 6 by, for example, the following mathematical expression (1).

[Math. 1]

$$\text{Energy absorption amount } EA = \int_0^\delta F(x)\,dx \quad \cdots (1)$$

When the mass of the frame member 20 is M, the energy absorption amount per unit mass can be calculated by the following mathematical expression (2).

[Math. 2]

$$\text{Energy absorption amount per unit mass } SEA = \frac{EA}{M} \quad \cdots (2)$$

In the graph of FIG. 6, $F_{max}$ is a maximum load. $F_{avg}$ is an average load and can be calculated by the following mathematical expression (3). $\delta$ is a displacement amount when $F_{max}$ is reached.

[Math. 3]

$$\text{Average load } F_{avg} = \frac{EA}{\delta} \quad \cdots(3)$$

The energy absorption amount when a compressive load is applied in the vertical direction of the frame member 20 varies depending on the cross-sectional shape of the frame member 20 illustrated in FIG. 3. The weight of the frame member 20 varies depending on the cross-sectional shape of the frame member 20 illustrated in FIG. 3. For example, the frame member 20 having the cross-sectional shape pattern of number "02" has less ribs than the frame member 20 of the cross-sectional shape pattern of number "32", and the weight is lighter by the difference in weight between the ribs of the frame member of the cross-sectional shape pattern having number "32" and the ribs of the frame member 20 having the cross-sectional shape pattern of number "02".

The frame member 20 according to the present embodiment is intended to improve collision resistance of the frame member 20 (collision performance) in the vertical direction (lateral direction) and to reduce the weight of the frame member 20; therefore, a desirable cross-sectional shape pattern of the frame member 20 is identified as follows, in a consideration of the weight of the frame member 20.

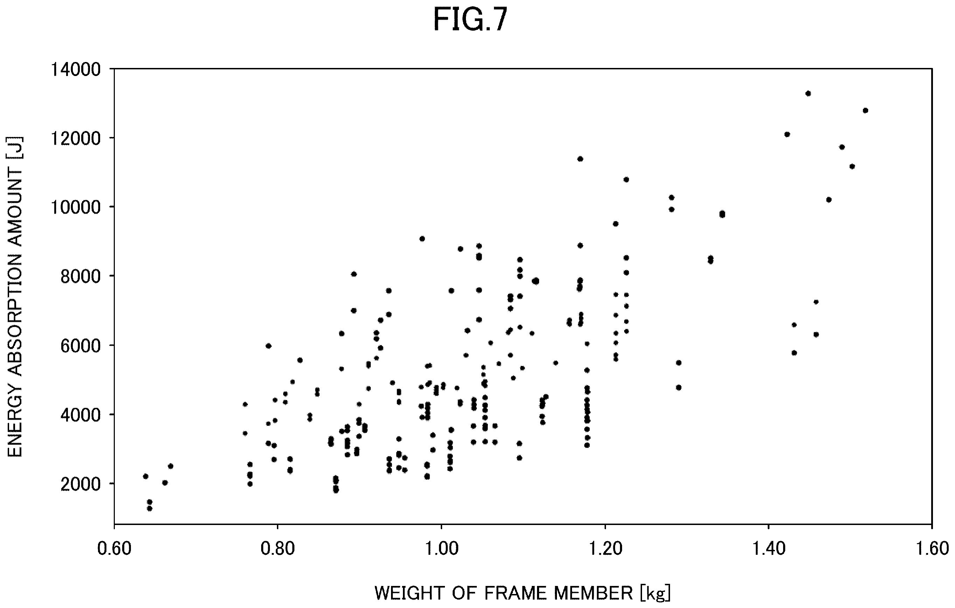

FIG. 7 is a graph plotting a relationship between the energy absorption amount and the weight of the frame member 20 for each cross-sectional shape pattern of the frame member 20. FIG. 7 is an example in which the relationship between the energy absorption amount and the weight of the frame member 20 for fifty cross-sectional shape patterns of the frame member 20 is plotted for four types of aluminum alloys, and illustrates a list of calculation results of $50 \times 4 = 200$ cases. The weight of the frame member 20 can be calculated based on the weight of the outer peripheral wall of the frame member 20 and the weight of the ribs forming the cross-sectional shape.

In FIG. 7, points located closer to the upper left represent the cross-sectional shape patterns of the frame member 20 having a larger energy absorption amount and a lighter weight. Therefore, in the present embodiment, the calculation results of the 200 cases illustrated in FIG. 7 are clustered according to an energy absorption amount per unit mass, and thereby a cross-sectional shape pattern of the frame member 20 to be achieved is identified.

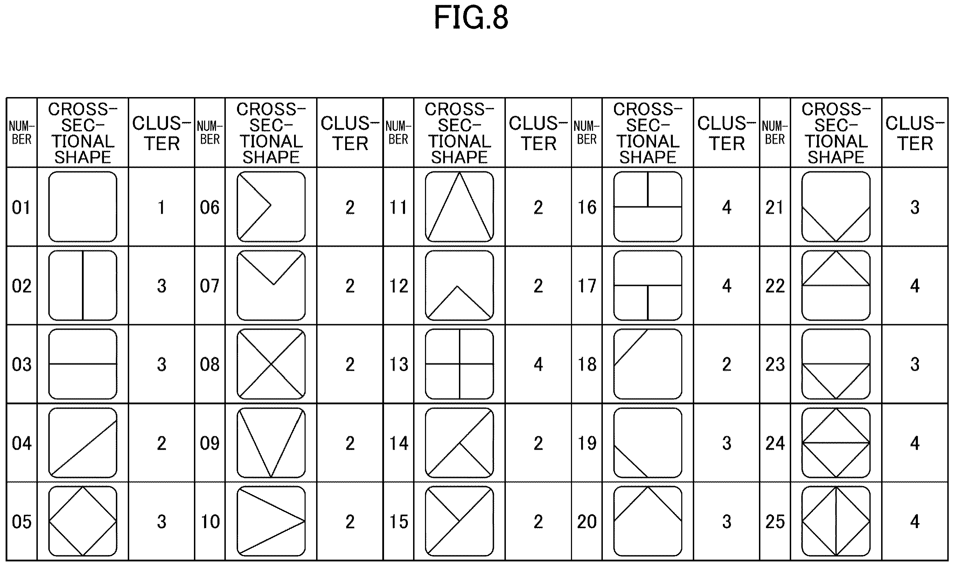

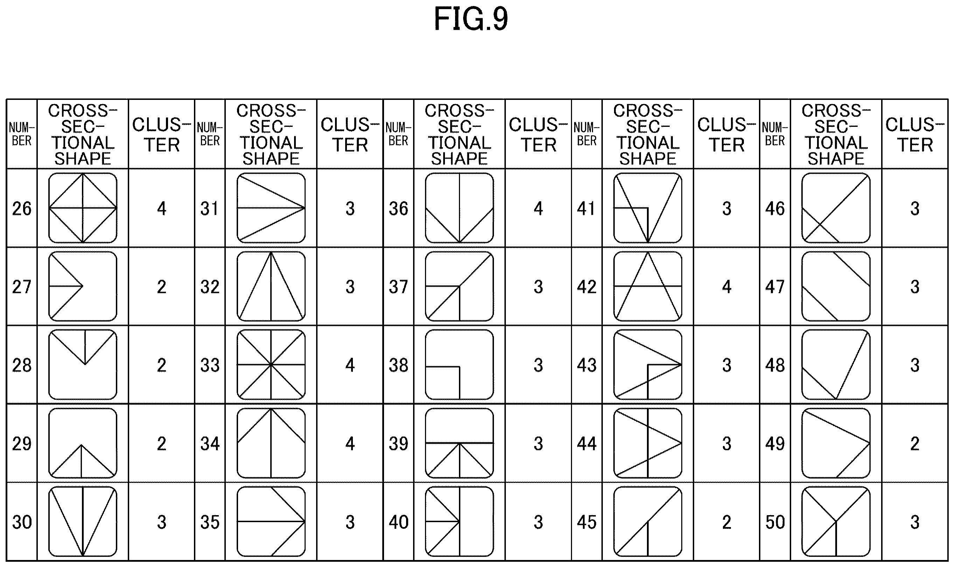

FIG. 8 and FIG. 9 are explanatory diagrams illustrating an example of a result of clustering according to an energy absorption amount per unit mass. FIGS. 8 and 9 illustrate the results of clustering performed for one of the four aluminum alloys. FIGS. 8 and 9 are examples in which fifty cross-sectional shape patterns of the frame member 20 are classified into "cluster 1" to "cluster 4" based on the result of clustering according to an energy absorption amount per unit mass.

The "cluster 4" is a classification in which an energy absorption amount per unit mass is the largest. An energy absorption amount per unit mass is smaller in "cluster 3" than in "cluster 4", in "cluster 2" than in "cluster 3", and "cluster 1" than in "cluster 2".

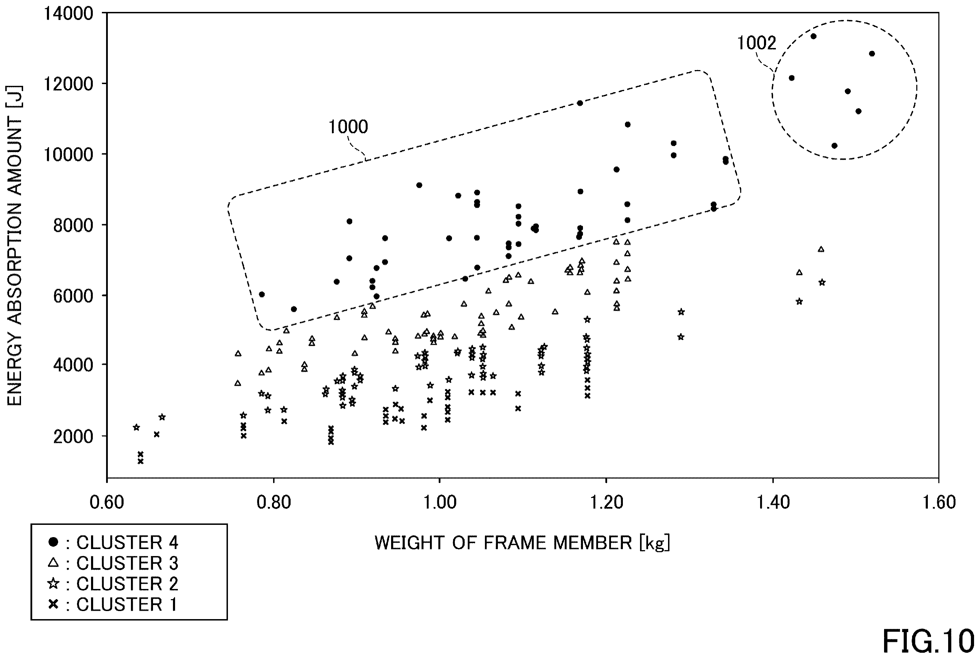

FIG. 10 is a diagram in which the results of clustering of FIGS. 8 and 9 are reflected in the plot of FIG. 7. In FIG. 10, different shapes are used for points for "cluster 1" to "cluster 4", so that the results of clustering the cross-sectional shape patterns of the frame member 20 represented by the plot can be identified.

For example, the points indicated by a black dot in FIG. 10 represent the cross-sectional shape patterns of the frame member 20 classified into "cluster 4". For example, the points indicated by a triangle in FIG. 10 represent the cross-sectional shape patterns of the frame member 20 classified into "cluster 3". For example, the points indicated by a star in FIG. 10 represent the cross-sectional shape patterns of the frame member 20 classified into "cluster 2". For example, the points indicated by an "x" in FIG. 10 represent the cross-sectional shape patterns of the frame member 20 classified into "cluster 1".

In the present embodiment, of the cross-sectional shape patterns of the frame member 20 classified into the "cluster 4", the characteristics of the cross-sectional shape patterns of the frame member 20 included in an area 1000, for example, are identified. In the present embodiment, because the workability and accuracy of the aluminum-alloy extruded material may be deteriorated when the ribs are excessively concentrated, the cross-sectional shape patterns of the frame member 20 classified into the "cluster 4" and included in an area 1002 are excluded from the cross-sectional shape patterns to be achieved. The cross-sectional shape patterns of the frame member 20 included in the area 1002 need not be excluded as a cross-sectional shape pattern of the frame member 20 to be achieved. If there is no problem in terms of the required processability and accuracy, improvement in processing technique, or the like, the cross-sectional shape patterns of the frame member 20 included in the area 1002 can be included as a cross-sectional shape pattern of the frame member 20 to be achieved.

The characteristics of the cross-sectional shape patterns of the frame member 20 included in the area 1000 can be identified based on the listed number of ribs connecting nodes 1 to 9 as illustrated in FIG. 4. In the present embodiment, judging from the number of ribs connecting nodes 1 to 9 of the cross-sectional shape patterns of the frame member 20 included in the area 1000, a cross-sectional shape in which there are two or more ribs, the maximum number of ribs connected to one node is three or less, and there are four or more nodes that are not connected to ribs can be identified as a cross-sectional shape pattern of the frame member 20 to be achieved.

For example, in the cross-sectional shape pattern of the frame member 20 illustrated in FIG. 3, the cross-sectional shape patterns of numbers "24", "35", "41", and "42" are identified as a cross-sectional shape pattern of the frame member 20 to be achieved.

According to the present embodiment, it is possible to propose the frame member 20 used as a battery case for electric vehicles, which is made of the aluminum-alloy extruded material having good extrudability, is light in weight, and has a high battery protection effect. In addition, according to the present embodiment, the traveling distance of the electric vehicle can be increased by reducing the weight of the battery case.

The above-described identifying of a cross-sectional shape pattern of the frame member 20 to be achieved can be made by an information processing apparatus based on the information illustrated in FIG. 4 and the information illustrated in FIG. 7. The information processing apparatus is a PC, a tablet terminal, or a smartphone operated by an operator. The information processing apparatus may be a server apparatus connected to an information processing terminal operated by an operator via a communication network such as the Internet.

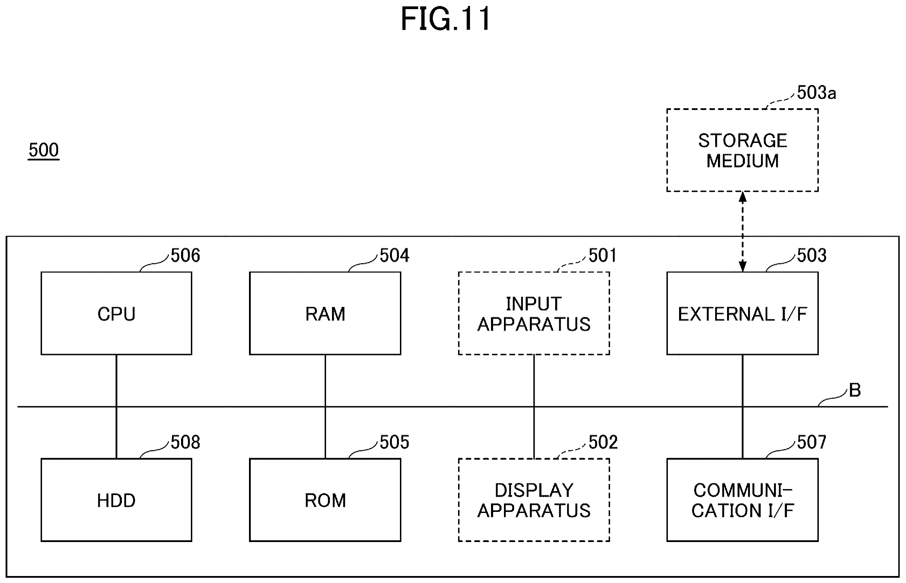

The information processing apparatus is implemented by, for example, a computer 500 having a hardware configuration illustrated in FIG. 11. FIG. 11 is a hardware configuration diagram of an example of a computer according to the present embodiment. The computer 500 of FIG. 11 includes an input apparatus 501, a display apparatus 502, an external I/F 503, a RAM 504, a ROM 505, a CPU 506, a communication I/F 507, an HDD 508, and the like, which are connected to each other via a bus B. The input apparatus 501 and the display apparatus 502 may be connected to each other.

The input apparatus 501 is a touch panel, an operation key or button, a keyboard, a mouse, or the like used by an operator to input various signals. The display apparatus 502 is configured by a display, such as a liquid crystal or organic EL display that displays a screen, a speaker that outputs sound data, such as voice or sound, and the like. The communication I/F 507 is an interface for the computer 500 to perform data transmission.

The HDD 508 is an example of a non-volatile storage device that stores programs and data. The stored programs and data include an OS, which is basic software for controlling the entire computer 500, and applications for providing various functions on the OS. The computer 500 may use a drive device (for example, a solid state drive (SSD)) using a flash memory as a storage medium instead of the HDD 508.

The external I/F 503 is an interface with an external device. The external device includes a storage medium 503a. The computer 500 can read and/or write data from/to the storage medium 503a via the external I/F 503. The storage medium 503a is, for example, a flexible disk, a CD, a DVD, an SD memory card, a USB-memory, or the like.

The ROM 505 is an example of a non-volatile memory (storage device) that can retain programs and date even when the power is turned off. The ROM 505 stores programs and information such as a BIOS, OS settings, and network settings to be executed when the computer 500 is activated. The RAM 504 is an example of a volatile memory (storage device) that temporarily stores programs and information.

The CPU 506 is an arithmetic device that reads programs and data from a storage device such as the ROM 505 or the HDD 508 onto the RAM 504 and executes processing to thereby realize control and functions of the entire computer 500. The computer 500 according to the present embodiment can realize information processing as described later by executing a program. The CPU 506 may read the program from the storage medium 503a storing the program via the external I/F 503 and execute the information process.

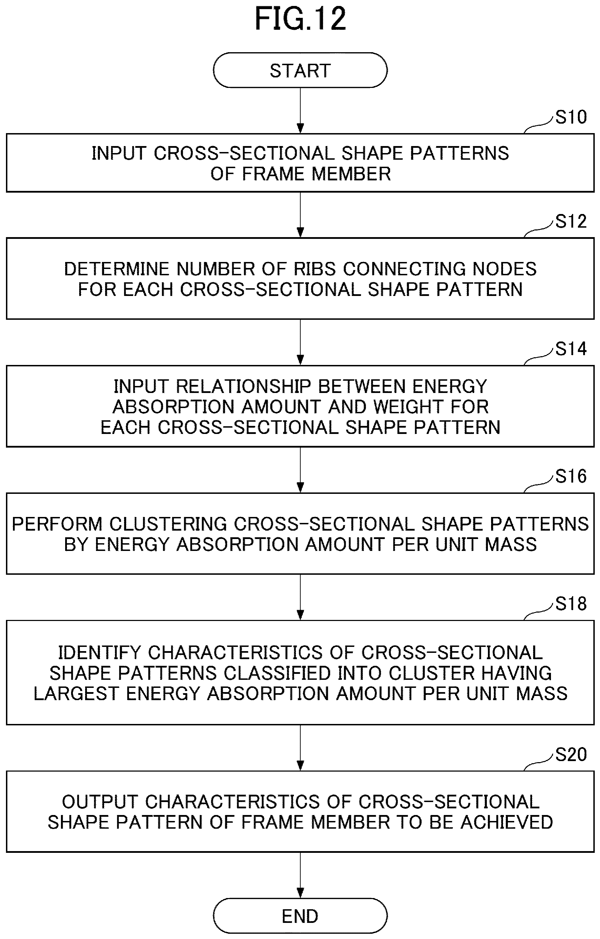

FIG. 12 is a flowchart of an example of a process for identifying a cross-sectional shape pattern of the frame member 20 to be achieved. In step S10, the computer 500 receives an input of information representing cross-sectional shape patterns of the frame member 20 illustrated in FIG. 3, for example.

In step S12, the computer 500 specifies the number of ribs connecting nodes 1 to 9 as illustrated in FIG. 4, for example, for each cross-sectional shape pattern of the frame member 20 illustrated in FIG. 3. The number of ribs connecting nodes 1 to 9 may be manually input by an operator.

In step S14, the computer 500 receives an input of information indicating the relationship between an energy absorption amount and a weight of the frame member 20 for each cross-sectional shape pattern of the frame member 20 illustrated in FIG. 7, for example.

In step S16, the computer 500 performs clustering the cross-sectional shape patterns of the frame member 20 according to an energy absorption amount per unit mass as illustrated in FIGS. 8 and 9, for example, based on the relationship between an energy absorption amount and a weight of the frame member 20 for each cross-sectional shape pattern of the frame member 20 that is input in step S14.

In step S18, the computer 500 identifies characteristics of the cross-sectional shape pattern classified into the cluster having a largest energy absorption amount per unit mass based on the result of the clustering in step S16. In the present embodiment, of the cross-sectional shape patterns classified into the cluster having a largest energy absorption amount per unit mass, a cross-sectional shape pattern in which the ribs are excessively concentrated is excluded from a cross-sectional shape pattern of the frame member 20 to be achieved. Of the cross-sectional shape patterns classified into the cluster having a largest energy absorption amount per unit mass, a cross-sectional shape pattern in which the ribs are excessively concentrated does not necessarily have to be excluded from a cross-sectional shape pattern of the frame member 20 to be achieved. Of the cross-sectional shape patterns classified into the cluster having a largest energy absorption amount per unit mass, the cross-sectional shape pattern in which the ribs are excessively concentrated can be included as a cross-sectional shape pattern of the frame member 20 to be achieved, if there is no problem in terms of the required workability and accuracy, improvement in processing technique, or the like.

The characteristics of the cross-sectional shape patterns identified in step S18 are those that can be identified from the number of ribs connecting nodes 1 to 9 listed as illustrated in FIG. 4. In the present embodiment, judging from the number of ribs connecting nodes 1 to 9 of the cross-sectional shape patterns of the frame member 20 included in the area 1000, a cross-sectional shape in which there are two or more ribs, the maximum number of ribs connected to one node is three or less, and there are four or more nodes that are not connected to ribs is specified as a cross-sectional shape pattern of the frame member 20 to be achieved.

In step S20, the computer 500 outputs the characteristics of the cross-sectional shape pattern of the frame member 20 to be achieved, which are identified in step S18, so that the characteristics can be proposed to the operator. In step S20, the computer 500 may output the characteristics of the cross-sectional shape pattern of the frame member 20 to be achieved, which are identified in step S18, to another apparatus such as an apparatus for producing a mold for an aluminum-alloy extruded material.

In this way, data representing the characteristics of the cross-sectional shape pattern of the frame member 20 to be achieved, which are output by the computer 500, may be used as input information to an apparatus for producing a die for an aluminum-alloy extruded material, for example. The apparatus for producing a mold for an aluminum-alloy extruded material can produce a mold by using data representing the characteristics the cross-sectional shape pattern of the frame member 20.

Although the present embodiment has been described above, it will be understood that various changes in form and detail may be made without departing from the spirit and scope of the appended claims. Although the present invention has been described based on the embodiments, the present invention is not limited to the above-described embodiments, and various modifications can be made within the scope of the claims. This application claims priority to Japanese Patent Application No. 2023-027447 filed on February 24, 2023, the entire contents of which are incorporated herein by reference.

REFERENCE SIGNS LIST

1 to 9  Node
10      Battery case
14      Side surface portion
20      Frame member
500     Computer

**Claims**

1. A frame member having an aluminum-alloy extruded material in which a plurality of nodes are set in a cross-sectional space of an outer peripheral wall and a plurality of ribs connecting the nodes are provided inside the outer peripheral wall, wherein
the frame member has a cross-sectional shape in which a maximum number of the ribs connected to one of the nodes is three or less and there are four or more nodes that are not connected to the ribs.

2. The frame member according to claim 1, wherein
the outer peripheral wall has a square cross section, and eight nodes are set at equal intervals on the outer peripheral wall of the cross section, and one node is set at a position of a center of the cross section.

3. The frame member according to claim 1 or 2, wherein
the frame is used as a battery case for an electric vehicle.

4. The frame member according to any one of claims 1 to 3, wherein
the cross-sectional shape of the frame member is identified based on a result of evaluating an energy absorption amount per unit mass when a compressive load is applied in a lateral direction of the frame member.

5. A method for manufacturing a frame member having an aluminum-alloy extruded material in which a plurality of nodes are set in a cross-sectional space of an outer peripheral wall and a plurality of ribs connecting the nodes are provided inside the outer peripheral wall, the method comprising:
manufacturing the frame member that has a cross-sectional shape in which a maximum number of the ribs connected to one of the nodes is three or less and there are four or more nodes that are not connected to the ribs.

FIG.1

# FIG.2

# FIG.3

EP 4 671 017 A1

| NUM-BER | CROSS-SECTIONAL SHAPE | NODE 1 | NODE 2 | NODE 3 | NODE 4 | NODE 5 | NODE 6 | NODE 7 | NODE 8 | NODE 9 |
|---|---|---|---|---|---|---|---|---|---|---|
| 01 | | 0 | 0 | 0 | 0 | 0 | 0 | 0 | 0 | 0 |
| 02 | | 0 | 1 | 0 | 0 | 2 | 0 | 0 | 1 | 0 |
| 27 | | 1 | 0 | 0 | 1 | 3 | 0 | 1 | 0 | 0 |
| 32 | | 0 | 3 | 0 | 0 | 2 | 0 | 1 | 1 | 1 |

⋮

**FIG.4**

EP 4 671 017 A1

# FIG.5

REACTION FORCE
(TEST FORCE)

32

50 km/h

20  30

# FIG.6

FIG.7

# FIG.8

EP 4 671 017 A1

FIG.9

| NUM-BER | CROSS-SEC-TIONAL SHAPE | CLUS-TER | NUM-BER | CROSS-SEC-TIONAL SHAPE | CLUS-TER | NUM-BER | CROSS-SEC-TIONAL SHAPE | CLUS-TER | NUM-BER | CROSS-SEC-TIONAL SHAPE | CLUS-TER | NUM-BER | CROSS-SEC-TIONAL SHAPE | CLUS-TER |
|---|---|---|---|---|---|---|---|---|---|---|---|---|---|---|
| 26 | | 4 | 31 | | 3 | 36 | | 4 | 41 | | 3 | 46 | | 3 |
| 27 | | 2 | 32 | | 3 | 37 | | 3 | 42 | | 4 | 47 | | 3 |
| 28 | | 2 | 33 | | 4 | 38 | | 3 | 43 | | 3 | 48 | | 3 |
| 29 | | 2 | 34 | | 4 | 39 | | 3 | 44 | | 3 | 49 | | 2 |
| 30 | | 3 | 35 | | 3 | 40 | | 3 | 45 | | 2 | 50 | | 3 |

EP 4 671 017 A1

FIG.10

# FIG.11

# FIG.12

START

S10

INPUT CROSS-SECTIONAL SHAPE PATTERNS
OF FRAME MEMBER

S12

DETERMINE NUMBER OF RIBS CONNECTING NODES
FOR EACH CROSS-SECTIONAL SHAPE PATTERN

S14

INPUT RELATIONSHIP BETWEEN ENERGY
ABSORPTION AMOUNT AND WEIGHT FOR
EACH CROSS-SECTIONAL SHAPE PATTERN

S16

PERFORM CLUSTERING CROSS-SECTIONAL SHAPE PATTERNS
BY ENERGY ABSORPTION AMOUNT PER UNIT MASS

S18

IDENTIFY CHARACTERISTICS OF CROSS-SECTIONAL
SHAPE PATTERNS CLASSIFIED INTO CLUSTER HAVING
LARGEST ENERGY ABSORPTION AMOUNT PER UNIT MASS

S20

OUTPUT CHARACTERISTICS OF CROSS-SECTIONAL
SHAPE PATTERN OF FRAME MEMBER TO BE ACHIEVED

END

## INTERNATIONAL SEARCH REPORT

| International application No. |
| --- |
| **PCT/JP2024/005091** |

**A. CLASSIFICATION OF SUBJECT MATTER**

***B60K 1/04***(2019.01)i; ***F16F 7/00***(2006.01)i; ***H01M 50/224***(2021.01)i; ***H01M 50/242***(2021.01)i
FI:  B60K1/04 Z; F16F7/00 Z; H01M50/242; H01M50/224

According to International Patent Classification (IPC) or to both national classification and IPC

**B. FIELDS SEARCHED**

Minimum documentation searched (classification system followed by classification symbols)

B60K1/04; F16F7/00; H01M50/224; H01M50/242

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-106540 A (DAIKYO NISHIKAWA KABUSHIKI KAISHA) 08 June 2015 (2015-06-08)<br>    paragraphs [0021]-[0070], fig. 1-15 | 1-5 |
| A | JP 2022-154687 A (AISHIN KK) 13 October 2022 (2022-10-13) | 1-5 |
| A | JP 2017-141860 A (MAZDA MOTOR CORPORATION) 17 August 2017 (2017-08-17) | 1-5 |
| A | JP 2013-133044 A (KABUSHIKI KAISHA KOBE SEIKO SHO) 08 July 2013 (2013-07-08) | 1-5 |
| A | CN 115214333 A (GREAT WALL MOTOR CO., LTD.) 21 October 2022 (2022-10-21) | 1-5 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 April 2024** | **23 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/005091**

| Patent document cited in search report | | | Publication date (day/month/year) | Patent family member(s) | | | Publication date (day/month/year) |
|---|---|---|---|---|---|---|---|
| JP | 2015-106540 | A | 08 June 2015 | (Family: none) | | | |
| JP | 2022-154687 | A | 13 October 2022 | US | 2022/0320662 | A1 | |
| | | | | CN | 115149178 | A | |
| JP | 2017-141860 | A | 17 August 2017 | (Family: none) | | | |
| JP | 2013-133044 | A | 08 July 2013 | (Family: none) | | | |
| CN | 115214333 | A | 21 October 2022 | (Family: none) | | | |

Form PCT/ISA/210 (patent family annex) (July 2022)

**EP 4 671 017 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004106612 A

- JP 2023027447 A